# EUROPEAN PATENT APPLICATION

(11) **EP 0 996 184 A2**
(43) Date of publication of application: **26.04.2000**
(21) Application number: 99308174.4
(22) Date of filing: 18.10.1999
(51) Int. Cl.: H01M 4/86, H01M 4/88, H01M 8/12

(54) **High performance solid oxide fuel cell anode**

(30) Priority: 19.10.1998 US 174995
(71) Applicant: Sofco, Salt Lake City, Utah 84119 (US)
(72) Inventor: Elangovan, Singaravelu, Sandy, Utha 84094 (US); Khandkar, Ashok Chandrashekhar, Salt Lake City, Utah 84109 (US); Bay, Insoo, Sandy, Utah 84093 (US); Timper, Mark, Salt Lake City, Utah 84109 (US)
(74) Representative: Flynn, Michael Joseph

(57) **Abstract**

An anode for a solid oxide fuel cell comprises a first component, a second component and a third component. The first component includes a first metal. The second component includes a component which precludes coarsening of the first metal of the first component. The third component includes a component for improving the electrochemical characteristics of the anode. The third component may likewise preclude sulfur degradation of the anode. The invention further comprises a method of fabricating the anode.

## Description

### Background of the Invention

### Field of the Invention

This invention relates generally to the field of fuel cells, and in particular, to porous anodes for solid oxide fuel cells.

### Background Art

Solid oxide fuel cells (SOFCs) are well known in the art. In particular, SOFCs are recognized as having the potential to mitigate environmental problems while meeting the power generation and cogeneration needs of tomorrow Present SOFCs that utilize zirconia electrolytes operate at temperatures between 900-1000°C. Such temperatures present special challenges relating to the degradation of certain materials, and in particular special challenges relating to anode construction.

In particular, SOFCs generally utilize a cermet anode, i.e., a mixture of yttria stabilized zirconia ceramic (cer) and Ni metal (met). The Ni phase provides an electrical conduction path in the anode and the zirconia phase provides an ionic conduction path and reduces the bulk thermal expansion coefficient of the anode so that it is close to that of the yttria stabilized zirconia electrolyte.

Another anode composition that is known in the art comprises the replacing of the zirconia in the cermet with doped ceria. The doped ceria develops a significant amount of electrical conduction while substantially retaining its oxygen ion conductivity in typical anode atmospheres. Thus, the number density of triple points where the gas phase, electrical conduction phase and ionic conduction phase meet increases through the presence of an ionic-electronic mixed conducting ceria phase. In other words, instead of the triple phase junction being the lines of contact between the gas and discrete electronic and ionic conductors, the three phase boundary is extended to the entire grain surface of ceria exposed to the gas phase. While such ceria containing anode compositions are known, the long term stability of the fuel cell still is a problem due to the coarsening of the Ni particles, and with degradation in the presence of fuel containing sulfur.

Accordingly, it is an object of the present invention to utilize a cermet comprising doped ceria having improved long term stability.

Further, it is an object of the present invention to increase the catalytic activity of the doped ceria cermet material.

These and other objects will become evident in light of the present Specification, Claims and Drawings.

### Summary of the Invention

The present invention is directed to an anode for a solid oxide fuel cell comprising a first component having a first metal, a second component including means for precluding coarsening of the first metal of the first component, and a third component including means for improving the electrochemical characteristics of the anode.

In a preferred embodiment of the invention, the first component includes ceria, and the first metal comprises Nickel.

In another preferred embodiment, the second component is selected from the group consisting of thorium oxide, zirconium oxide, magnesium oxide and tungsten oxide.

It is also contemplated that the third component is selected from the group consisting of praseodymium and cobalt. Additionally, the third component may include means for precluding sulfur degradation of the anode.

In yet another preferred embodiment, the invention is directed to an anode for a solid oxide fuel cell comprising a first component having a first metal, a second component which includes means for precluding coarsening of the first metal of the first material and a third component which includes means for precluding sulfur degradation of the anode.

In one preferred embodiment, the third component is selected from the group consisting of praseodymium and cobalt.

The present invention is also directed to a method for fabricating an anode for a solid oxide fuel cell. In such an embodiment, the method comprises the steps of a) forming an anode material from a first component including a first metal, a second component including means for precluding coarsening of the first metal, and a third component including means for improving the electrochemical characteristics of the material; and b) associating the anode material with an electrolyte substrate.

In this preferred embodiment, the step of forming comprises the steps of c) fabricating an anode of the first and second components; d) introducing the third component; and e) reducing the fabricated anode with the third component It is also preferred that the step of introducing the third component comprises the step of infiltrating the anode of the first and second components with the third component.

In another preferred embodiment, the invention includes a method for fabricating an anode for a solid oxide fuel cell comprising the steps of a) forming an anode material from a first component including a first metal, a second component including means for precluding coarsening of the first metal, and a third component including means for precluding sulfur degradation of the anode, and b) associating the anode material with an electrolyte substrate.

### Brief Description of the Drawings

Fig. 1 of the drawings is a side elevational view of the anode of the present invention;
Fig. 2 of the drawings is a graph showing cell potential in millivolts against time in hours for a fuel cell using one embodiment of the present invention,
Fig. 3 of the drawings is a graph showing cell potential in volts against current density for two fuel cells prepared according to different embodiments of the present invention;
Fig. 4 of the drawings is a graph showing cell power density versus current density of the same cells used in Fig. 3;
Fig. 5 of the drawings is a graph showing volts per cell vs. current density for three cell stacks, two of which are made with the catalyst material and one of which is not made with the catalyst material,
Fig. 6 of the drawings is a graph showing the voltage per cell versus time in hours for three cell stacks, one of which is made with the catalyst;
Fig. 7 of the drawings is a graph showing the cell voltage against current density for a fuel cell without the catalyst in different fuel compositions;
Fig. 8 of the drawings is a graph showing the cell voltage over time of the cell of Fig. 7;
Fig. 9 of the drawings is a graph showing cell voltage vs. Current density for a fuel cell of the present invention made with the catalyst; and
Fig. 10 of the drawings is a graph showing cell voltage vs. time for the cell of Fig 9.

### Best Mode for Practising the Invention

While this invention is susceptible of embodiment in many different forms, there is shown in the drawings and will herein be described in detail, several specific embodiments, with the understanding that the present disclosure is to be considered as an exemplification of the principles of the invention and is not intended to limit the invention to the embodiments illustrated.

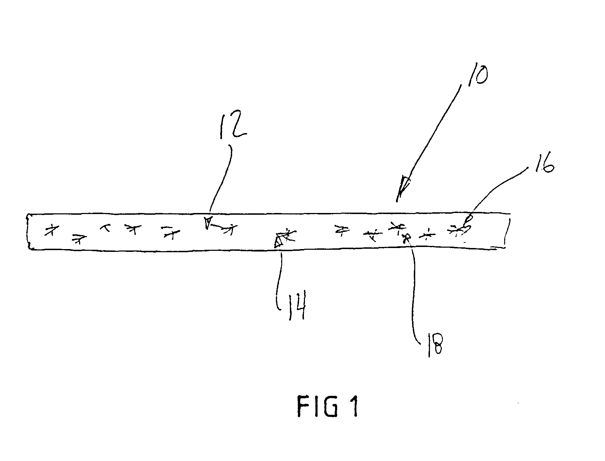

Anode 10 is shown in Fig. 1 as comprising the product of a reaction and/or combination of a nickel based material 12, ceria based material 14, an inhibitor material 16 and catalytic material 18. The nickel based material may initially comprise a nickel oxide which is commonly known in the art. While various compositions are contemplated, the nickel comprises about 30% of the volume of the anode. Ceria based material 14 for use in solid oxide fuel cells is also conventionally known in the art.

Inhibitor material 16 comprises a magnesium oxide As will be explained, the magnesium oxide provides a means for precluding the coarsening of nickel during the processing and the operation of the anode in the SOFC. While the use of magnesium is disclosed, the anode may instead utilize an inhibitor material comprising various thorium, zirconia and tungsten oxides, among others.

Catalytic material 18 may comprise such materials as praseodymium and cobalt As will be explained, the catalytic material provides a means for improving the electrochemical characteristics of the anode and a means for providing resistance to sulfur degradation. The particular quantity of the catalytic material can be further determined through experimentation, however, the catalytic material is effective even when present in very minor quantities.

The fabrication of such an anode may be undertaken through several different processes. For instance the anode may be constructed by forming a sinterable material from liquid precursors of nickel and magnesium such as nitrate salts. Of course, other salts are likewise contemplated for use.

The solid solution may be fabricated by ball milling oxides of nickel and magnesium, preferably along with ceria and a dopant oxide such as calcia or samaria and calcine the mixture at 900-1000°C for 6-8 hours. Alternatively, as disclosed in U.S. Patent No. 3,330,697 to Pechini, liquid precursors, preferably nitrates, are admixed in stoichiometric proportions with ethylene glycol and citric acid and thermally decomposed and polymerized at approximately 150°C. The resulting char is de-agglomerated by ball milling, calcined at 900-1000°C for 8 hours, and remilled to achieve a final product. The liquid precursor may contain nitrates of nickel and magnesium and the solid solution of nickel and magnesium oxides thus obtained will be ball milled with ceria doped with oxides of alkaline earth elements such as calcia, magnesia or strontia or preferably doped with rare earth elements such as yttria, samaria and gadolinia.

Another method of fabrication of such an anode comprises the admixing of nitrates of cerium and a dopant element with nitrates of nickel and magnesium to obtain a two phase mixture containing a solid solution of nickel oxide and magnesium oxide being one phase and doped ceria being the other. The anode powder that is synthesized is made into a paste suitable for screen printing by admixing the powder with a binder, such as those available commercially for the purpose and a solvent, such as terpineol. The paste is then screen printed onto a sintered zirconia electrolyte and fired at 1200-1400°C. A cathode made of strontium doped lanthanum manganite preferably mixed with zirconia may also be screen printed onto the opposite side and sintered at the same time or as a separate step.

Alternatively, the fabrication of the cell may comprise casting a tape of the anode material and laminate with a tape of yttria stabilized zirconia electrolyte and sintering the laminate. The laminate may also involve a tape of the cathode material laminated to the opposite side onto the zirconia electrolyte. The three layer laminate after formation is cosintered. Alternatively, the laminate of the anode and zirconia may be cosintered and the cathode applied onto the opposite side by screen printing, spraying or brushing. While not limited thereto, the sintered anode layer typically has a porosity of between about 10 and 50 percent, and preferably about 30-40 percent. At this stage, the catalytic material, a liquid form of nitrates of cobalt and/or praseodymium, is impregnated into the anode material. That is, the porous spaces of the anode material receive a coating of the liquid material. The catalytic impregnated composition is then reduced in the fuel cell at the operating temperature (600-900°C) by the fuel introduced into the anode chamber. Reduction in the fuel cell converts the nickel oxide into nickel while the magnesia does not reduce and remains finely dispersed in the nickel. The ceria partially reduces and develops electronic conductivity while substantially retaining its ionic conductivity. The high temperature also converts the praseodymium and cobalt salts to praseodymium and cobalt metal. The fine metal particles are dispersed over the nickel and ceria grains. The content of the catalytic material, namely, praseodymium or cobalt in the reduced anode is generally less than 1% by weight, but is not limited thereto.

Of course, other methods of fabricating such an anode are likewise contemplated, including variations on the above-identified methods of fabrication.

Several tests were performed using anodes disclosed above. These tests, all of which are summarized below, confirmed that the anode using the inhibitor material made in accordance with the present invention exhibited extended stability compared to conventional SOFC anodes, and, anodes using the catalytic material exhibited improved electrical properties and resistance to sulfur degradation. In support of the above, several examples are provided hereinbelow

### Example 1

A fuel cell according to one embodiment of the invention was prepared The anode in this particular example was prepared as follows: a liquid precursor, as disclosed in Pechini, U.S. Pat. No. 3,330,697, synthesized a solid solution of NiO and MgO. Nitrate solutions of nickel and magnesium were mixed to provide a Ni:Mg ratio of 9:1. Through decomposition of the precursor, which was followed by a calcination of the char at 1000°C for 6-8 hours, a single phase NiO-MgO solid solution resulted. The single phase properties were verified by x-ray diffraction techniques. Next, the solid solution powder was mixed with 10% calcia doped ceria and ball milled using an ethanol medium for 2-4 hours. The mixture was dried at 80°C overnight to provide the resulting anode powder. Subsequently, a printable ink was formulated from a slurry of the anode powder, an organic binder and a solvent.

With respect to the cathode, a printable ink of strontium doped LaMnO₃ was formulated. Both the anode and cathode were screen printed on opposite sides of a tape cast 8 mole % yttria doped zirconia electrolyte which was 35 mm in diameter and 170 microns thick. Subsequently, the electrodes were sintered at 1200-1300°C for 15 minutes to 1 hour. The resulting electrode active area was 2.5 cm². Next, a platinum mesh of wires was attached over the electrodes via a platinum ink. The platinum mesh was fired at 1000°C for one hour. Lastly, the anode side of the disc was sealed to a zirconia tube to form a fuel manifold

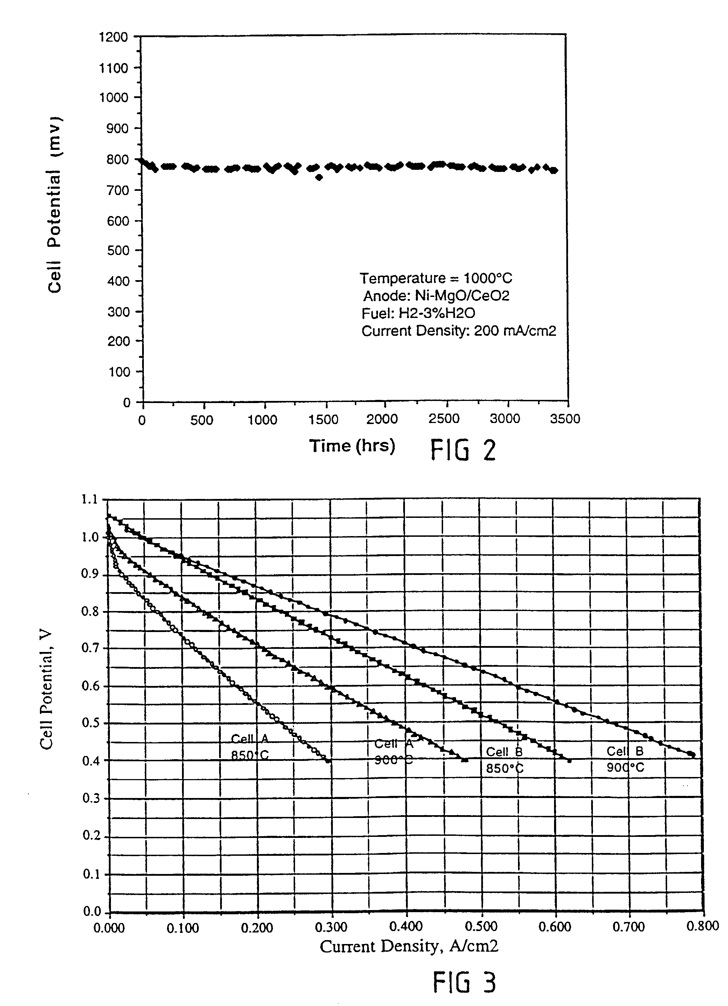

Once completed, the cell was tested at various temperatures ranging from 800-1000°C. Subsequently, a 200 mA/cm² load at 1000°C was applied to the cell for a long term test for 3500 hours. The results of the test are shown in Fig. 2 of the drawings. In particular, as depicted in the drawing, no degradation or change in performance was observed over the 3500 hours. As a result, it has been concluded that the anode was stable even at a high operating temperature of 1000°C with the anode constructed pursuant to the present invention. This particular example did not additionally add any type of catalysts to the SOFC construction.

### Example 2

A fuel cell having a Ni-MgO-CeO₂ composite porous anode on a zirconia electrolyte was prepared according to the invention. In particular, the anode material was prepared by admixing finely divided solid particles of NiO, MgO and CeO₂ along with a dopant oxide such as CaO, Sm₂O₃ or nitrate precursors of the above mentioned cations in proper quantities to yield composition in which the reduced nickel phase is at least about 30% by volume. A typical ratio for NiO to CeO₂ is from about 70:30 to 55:45 on a weight basis. To maintain a minimum of 30% by volume of nickel in the reduced anode, up to 30 mole % MgO can be added to obtain the solid solution Ni_{0.7}Mg_{0.3}O. While not limited thereto, generally, a preferred composition thereof contains a solid solution of Ni₍₁₋ₓ₎MₓO where x = 0.1 to 0.2.

Once the appropriate quantities of finely divided solid particles of oxides are admixed with a binder and solvent, they are elasticized to form a viscous paste. This paste was then screen printed onto a planar zirconia electrolyte having a thickness of 170 microns. The resulting screen printing resulted in a layer having a thickness of in the range of 30 to 50 microns. The screen printing was done on a planar zirconia electrolyte of 170 microns in thickness.

The anode paste layer was then fired at a temperature of about 1200-1300"C for a period sufficient to drive off the binder, solvent and plasticizer and sinter the anode material and bind them to the electrolyte. Most of the MgO forms a solid solution with NiO, however, some migrates into the ceria and some into the zirconia, thus enhancing the bond between the anode and the electrolyte

Using the above-identified fabrication method, two identical disc cells, cell A and cell B, were prepared, both containing a Ni-MgO-CeO₂ anode and a strontium doped LaMnO₃ cathode. Prior to testing, cell B had a catalyst mixture containing an equimolar mixture of praseodymium and cobalt nitrate solution infiltrated therein. Both cells were heated to test temperature with flowing hydrogen at about 25 cc/minute that was humidified at 25-30°C.

Fig. 3 compares the performance of the two cells. Cell B that had the catalyst infiltration performed significantly better than the cell A that had no catalyst infiltration. The performance of cell B was superior at 850°C to cell A at 900°C

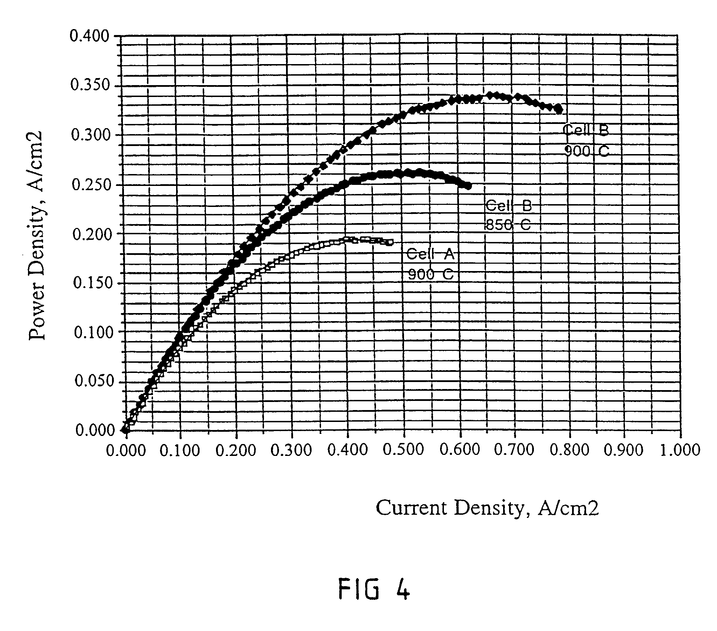

Fig. 4 compares the power densities obtained from the two cells. The peak power density of cell B is nearly double that of cell A at the same temperature Thus, the catalyst material improved the electrochemical properties of the anode.

### Example 3

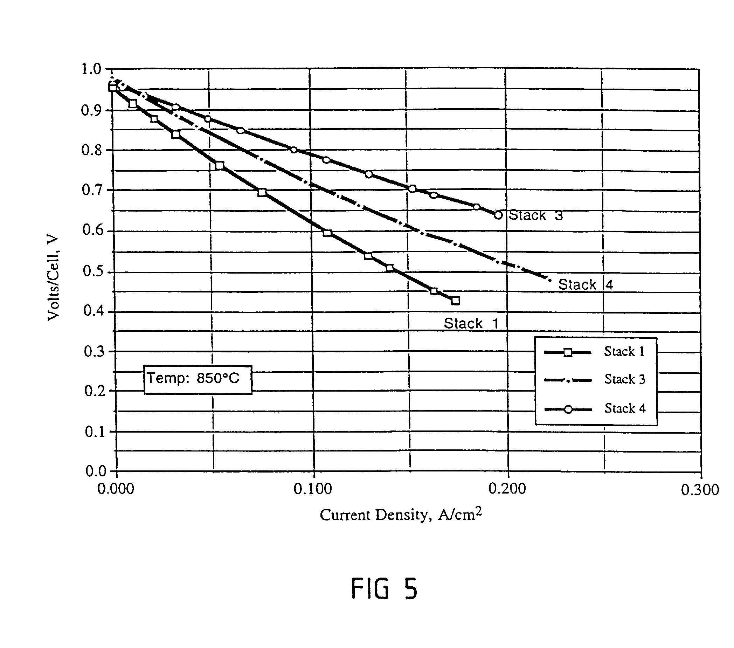

For this example, stacks of cells were constructed using cells similar in construction as in Example 2 but larger in area (5 cm x 5 cm). In particular, five cells were stacked with doped LaCrO₃ separator plates between the cells Such a construction represents a scaled down version of commercial power generation devices. Several identical stacks were built, some with an anode containing infiltrated catalyst material and some without any catalyst material. Typical stack performances are shown in Fig. 5, wherein Stack 1 used Ni-MgO-CeO₂ anode without any catalyst material, while stacks 3 and 4 contained the catalyst material As shown graphically in Fig. 5, stacks 3 and 4 performed significantly better than Stack 1, and exhibited improved electrochemical properties.

Several of these stacks were likewise maintained at a constant current density to monitor their long term behaviour. Stacks 1 and 2 that had Ni-MgO-CeO₂ anodes without any catalyst material were stable for times approaching 10,000 hours and a similar stability was shown by the stack that had a Ni-MgO-CeO₂ anode with the catalyst material.

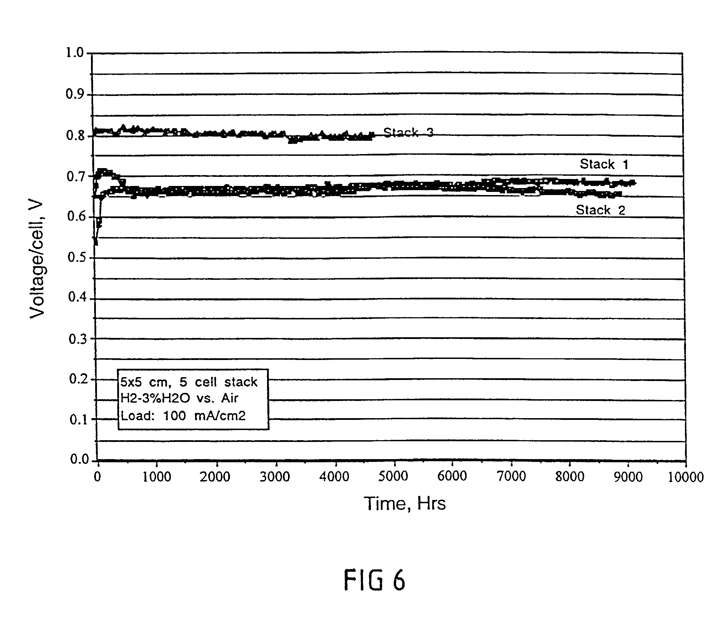

Moreover, as can be seen in Fig. 6, as with the disc cells, the Stack with catalyst material, namely Stack 3, showed improved performance at a lower temperature over the Stacks with no catalyst material, namely Stacks 1 and 2. In particular, although tested at different current densities, equivalent voltages at 100 mA/cm² are plotted in Fig. 6 for comparison. As shown, Stacks 1 and 2 that contained Ni-MgO-CeO₂ anode without the catalyst were operated at 900° C, while Stack 3 that contained Ni-MgO-CeO₂ anode with the infiltrated catalyst was operated at 850°C.

### Example 4

Two standard disc cells were constructed according to the method used for the construction of the cells of Example 2 in which Ni-MgO-CeO₂ anodes of electrode active area 2.5 cm² were tested using varying concentrations of H₂S in the fuel stream. Each of these button cells were prepared in an identical manner with the exception that the anode of the second cell was infiltrated with a catalyst material which comprised a mixture of Pr and Co nitrate solution prior to testing.

The cells were heated from room temperature to 800°C at 1°C/min. with dry H₂ flowing to the anode at the rate of 20 cc/minute and air flowing to the cathode The cells were then tested at 800°C, 850"C and 900"C. The cell temperature remained at 900°C for the evaluation of cell performance characteristics in H₂S.

Next, a series of tests were completed to compare performance characteristics in H₂ and with compositions of 5ppm, 50ppm H₂S in H₂. For each change in fuel gas composition, the cells were left under no load for 45 to 60 minutes in order to flush out the previous gas species and to let the cell stabilize. After this series of tests was completed, the cells were returned to H₂ gas and put under a constant current load of 200 mA/cm² in order to determine a baseline cell stability. The first cell ran for 44 hours before introducing 50ppm concentration of H₂S. Later, the cell was tested with 500ppm H₂S. The second cell ran for 96 hours in H₂ before 500ppm H₂S was introduced.

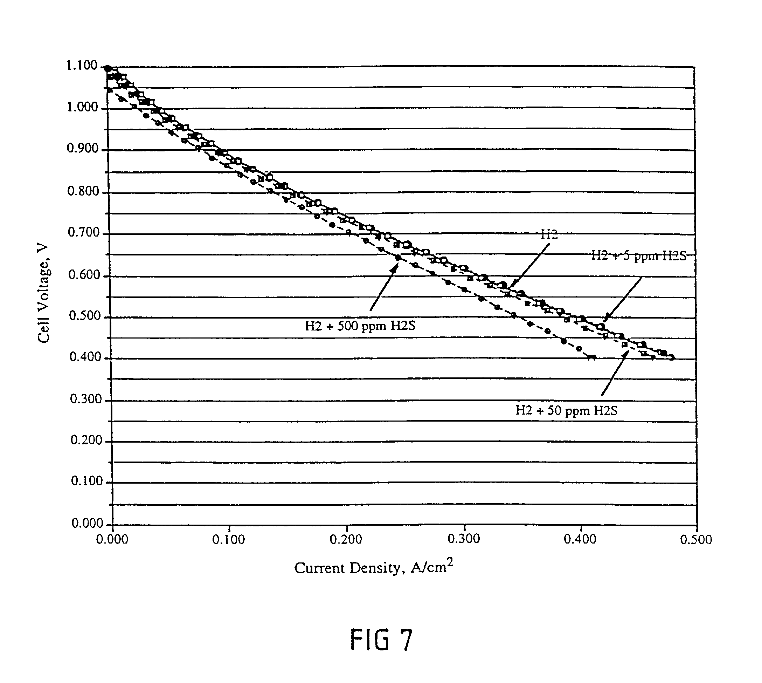

The results are shown in Fig. 7 for the performance of the cell without the catalyst at 900°C under various fuel composition conditions. It can be seen that the performance did not change when the fuel was changed from dry hydrogen to hydrogen containing 5ppm H₂S. There is a slight decrease in performance with 50ppm H₂S containing fuel and another decrease in performance when more than 500ppm H₂S containing fuel was introduced. This test showed that the Ni-MgO-CeO₂ anode can tolerate short exposures to fuel containing high amounts of sulfur species.

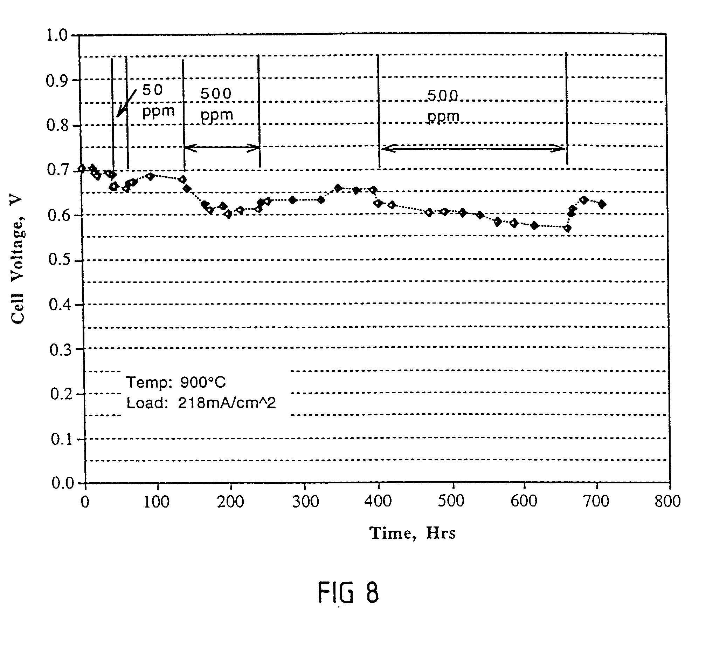

Fig. 8 shows long term performance of the above-identified cell under various sulfur-containing fuel conditions. There appears to be some loss in performance with time, although most of the performance is recoverable when the fuel is switched back to hydrogen.

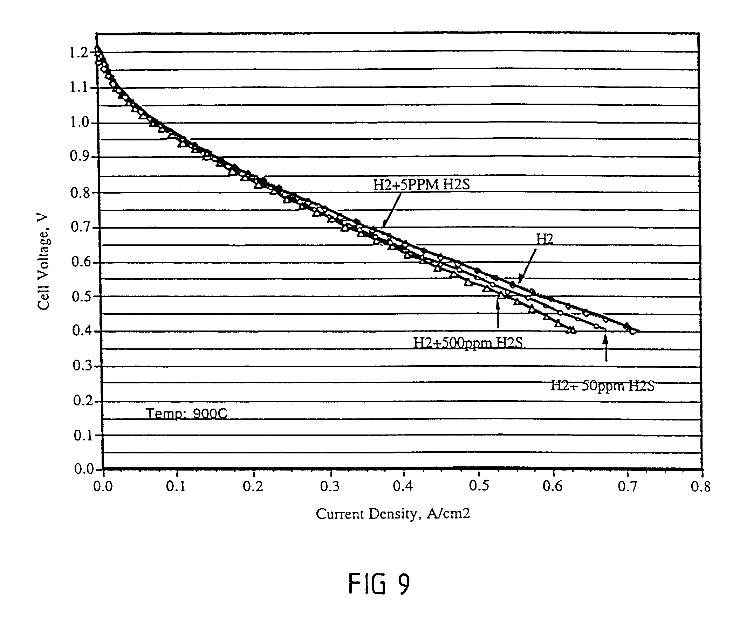

Fig. 9 shows the performance of the cell with the catalyst at 900"C under various fuel composition conditions. The change in performance with the presence of a sulfur species is identical to the previous cell, except that at each given condition the cell performance is significantly improved. It can be seen that the performance did not change when the fuel was changed from dry hydrogen to hydrogen containing 5ppm H₂S. There is a slight performance decrease with 50ppm H₂S-containing fuel and a further performance decrease with 500ppm H₂S-containing fuel. This test shows that the Ni-Mgo-CeO₂ anode with the catalyst infiltration can tolerate short exposures to fuel containing high amounts of a sulfur species and that this can maintain higher performance at any concentration of sulfur.

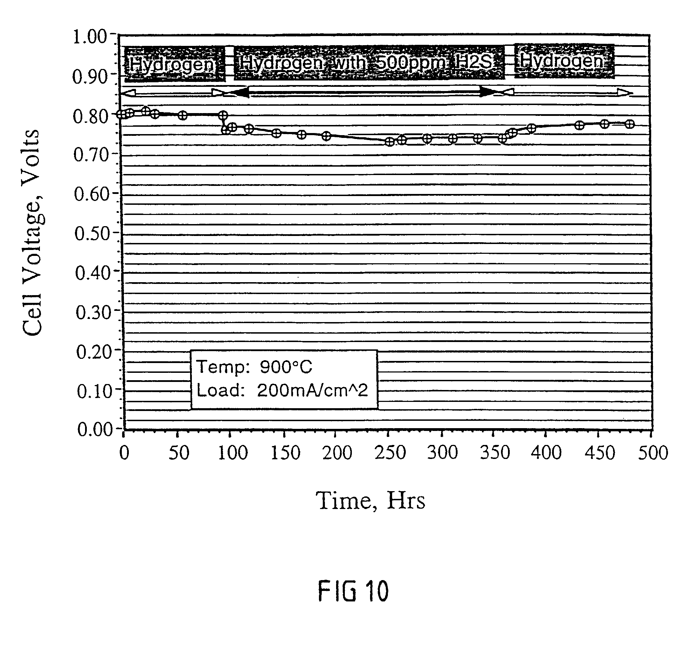

Fig. 10 shows the long term performance of the cell with the catalyst. In particular, the cell that has the catalyst material exhibited a 150 mV higher performance at the same current density and was stable at 0.75 V for nearly 500 hours with a total exposure to 500ppm H₂S of more than 250 hours After an initial small decrease in voltage the cell performance becomes stable. Upon reverting to hydrogen fuel the cell voltage is within 20 mV of its original performance which is only 2.5% of performance loss. Thus, the present invention shows that the anode is sulfur tolerant with a small decay in cell voltage which stabilizes over time even for long exposure time to H₂S containing fuel

The foregoing description and drawings merely explain and illustrate the invention and the invention is not limited thereto except insofar as the appended claims are so limited, as those skilled in the art who have the disclosure before them will be able to make modifications and variations therein without departing from the scope of the invention.

## Claims

1. An anode for a solid oxide fuel cell comprising:
- a first component having a first metal;
- a second component including means for precluding coarsening of the first metal of the first component; and
- a third component including means for improving the electrochemical characteristics of the anode.

2. The anode according to claim 1 wherein the first component includes ceria.

3. The anode according to claim 1 or claim 2 wherein the first metal comprises Nickel.

4. The anode according to any one of claims 1 to 3 wherein the second component is selected from the group consisting of thorium oxide, zirconium oxide, magnesium oxide and tungsten oxide.

5. The anode according to any one of the preceding claims wherein the third component is selected from the group consisting of praseodymium and cobalt.

6. The anode according to any one of the preceding claims wherein the third component further includes means for precluding sulfur degradation of the anode.

7. An anode for a solid oxide fuel cell comprising:
- a first component having a first metal;
- a second component which includes means for precluding coarsening of the first metal of the first material; and
- a third component which includes means for precluding sulfur degradation of the anode.

8. The anode according to claim 7 wherein the third component is selected from the group consisting of praseodymium and cobalt.

9. A method for fabricating an anode for a solid oxide fuel cell comprising the steps of:
- forming an anode material from a first component including a first metal, a second component including means for precluding coarsening of the first metal, and a third component including means for improving the electrochemical characteristics of the material; and
- associating the anode material with an electrolyte substrate.

10. The method according to claim 9 wherein the step of forming comprises the steps of:
- fabricating an anode of the first and second components;
- introducing the third component; and
- reducing the fabricated anode with the third component.

11. The method according to claim 10 wherein the step of introducing the third component comprises the step of infiltrating the anode of the first and second components with the third component.

12. A method for fabricating an anode for a solid oxide fuel cell comprising the steps of:
- forming an anode material from a first component including a first metal, a second component including means for precluding coarsening of the first metal, and a third component including means for precluding sulfur degradation of the anode; and
- associating the anode material with an electrolyte substrate
